# EUROPÄISCHE PATENTSCHRIFT

(11) **EP 3 022 878 B1**
(45) Veröffentlichungstag und Bekanntmachung des Hinweises auf die Patenterteilung: **11.04.2018**
(21) Anmeldenummer: 14732139.2
(22) Anmeldetag: 16.06.2014
(51) Int. Cl.: H04L 12/825, H04L 12/911, H04L 12/801, H04L 12/851

(54) **VERFAHREN UND VORRICHTUNG ZUM AUSSENDEN VON DATEN UND VERFAHREN UND VORRICHTUNG ZUM AUSSENDEN EINES KENNUNGSSIGNALS**
METHOD AND DEVICE FOR SENDING DATA, AND METHOD AND DEVICE FOR SENDING AN IDENTIFICATION SIGNAL
PROCÉDÉ ET DISPOSITIF POUR ENVOYER DES DONNÉES, ET PROCÉDÉ ET DISPOSITIF POUR ENVOYER UN SIGNAL D'IDENTIFICATION

(30) Priorität: 17.07.2013 DE 102013214005
(43) Veröffentlichungstag der Anmeldung: 25.05.2016
(73) Patentinhaber: ZF Friedrichshafen AG, 88046 Friedrichshafen (DE)
(72) Erfinder: GRAF, Alexander, 88048 Friedrichshafen (DE)
(86) Internationale Anmeldenummer: PCT/EP2014/062506
(87) Internationale Veröffentlichungsnummer: WO 2015/007442

(56) Entgegenhaltungen:
- GB-A- 2 428 941
- US-A- 5 537 395

## Beschreibung

Die vorliegende Erfindung bezieht sich auf ein Verfahren und eine Vorrichtung zum Aussenden von Daten sowie ein Verfahren und eine Vorrichtung zum Aussenden eines Kennungssignals.

Funkschalter und andere Hochfrequenzgeräte nutzen häufig ISM-Bänder (ISM; Industrial, Scientific and Medical) zur Datenübertragung. Aufgrund der Tatsache, dass diese ISM-Bänder lizenzfrei genutzt werden können, treffen bei deren Nutzung oft konkurrierende Funkteilnehmer aufeinander, deren jeweilige Applikationen bevorzugt in diesem Band arbeiten. Bei den konkurrierenden Teilnehmern kann es sich auch um das eigene Produkt handeln.

Die gesetzlichen Vorgaben zur Nutzung beispielsweise des 868-MHz-ISM-Bandes legen eine maximale Nutzung von 1 % der Zeit (1%-Duty-Cycle) oder einen LBT-Betrieb fest (LBT; Listen Before Talk = erst hören, dann sprechen). Aufgrund dieser 1%-Duty-Cycle-Vorgabe muss von jeder Station bzw. jedem Funkteilnehmer der zur Verfügung stehende Kanal also zu ca. 99 % frei gehalten werden, sodass Datenkollisionen mit einer geringeren Wahrscheinlichkeit auftreten.

Um die Wahrscheinlichkeit einer gestörten Übertragung weiter zu senken, sind im Stand der Technik (evtl. mehrfache) Wiederholungen der Aussendungen mit festen und zufälligen Warteintervallen und die Nutzung des LBT-Betriebs bekannt. Beispielsweise wird ein LBT-Protokoll verwendet, um die Übertragung sicherzustellen. Bei einem solchen LBT-Protokoll hört der sendewillige Funkschalter zunächst in den Kanal hinein und stellt fest, ob dieser frei ist. Erst bei erkanntem freien Kanal beginnt er mit der Aussendung seiner Daten.

Alternative wird in der US Patentschrift US 5,537,395 ein Verfahren offenbart wobei ein "Channel Capacity Flag" wiederholend ausgesendet wird, sodass ein "mobile End-System" dieses Signal abhören kann, und anhand der darin enthaltenen

Informationen entsprechend reagieren kann. Insbesondere, wenn diese "Channel Capacity Flag" eine Information enthält, dass die Channel gerade ausgelastet ist, wartet das "mobile End-System" bis diese Zustand sich ändert, oder versucht Zugang zu einem alternativen Kanal zu schaffen. Diese Vorgehensweise dient im Endeffekt zum Ausbalancieren der Last auf mobile Funknetzwerke.

Vor diesem Hintergrund schafft die vorliegende Erfindung ein verbessertes Verfahren zum Aussenden von Daten sowie eine entsprechende Vorrichtung und ein verbessertes Verfahren zum Aussenden eines Kennungssignals sowie eine entspre chende Vorrichtung gemäß den Hauptansprüchen. Vorteilhafte Ausgestaltungen ergeben sich aus den Unteransprüchen und der nachfolgenden Beschreibung.

Ein Aussenden von Daten aus einer Sendestation ansprechend auf ein von einer Empfangsstation bereitgestelltes Kennungssignal einer freien Datenübertragungskapazität in einem Datenübertragungskanal erhöht die Wahrscheinlichkeit einer gelungenen Übertragung bei zugleich gegenüber einem normalen LBT-Verfahren gesenktem Stromverbrauch.

Gemäß dem hier vorgestellten Konzept kann eine Datenübertragung beispielsweise von einem autarken Funkschalter zu einer Empfangsstation sichergestellt werden, wobei der Funkschalter weitgehend ohne den für Übertragungswiederholungen benötigten Energiebedarf auskommen aber uneingeschränkt die Vorteile eines LBT-Protokolls bereitstellen kann. Die zu übertragenden Funkimpulse können damit entsprechend kürzer ausgelegt werden, wodurch wiederum eine Belastung des ISM-Bandes geringer gehalten werden kann. In der Folge kann die Dauer einer Kanalbelegung bzw. die Dauer eines vorzusehenden Warteintervalls eines Funkteilnehmers vorteilhafterweise so weit reduziert werden, dass der begrenzte Energievorrat beispielsweise eines Funkschalters nicht zu weit reduziert zu werden braucht.

Vorteilhafterweise kann mit einer Umsetzung des hierin vorgeschlagenen Ansatzes die Wahrscheinlichkeit von Datenkollisionen in ISM-Bändern und vergleichbaren Frequenzbereichen wirksam reduziert werden, selbst wenn in Zukunft immer mehr Teilnehmer diese Bänder nutzen werden, wovon auszugehen ist. Es können somit viele Funkteilnehmer in einer näheren Umgebung eines gegebenen Funkkanals diesen nutzen, ohne dass es zwangsläufig dazu kommt, dass der Kanal längere Zeit belegt ist. Auch eine Anzahl von Wiederholungen einer Sendung durch einen Funkteilnehmer kann reduziert werden, da durch die gemäß der Erfindung erzielte Entlastung des Bandes mit weniger Übertragungsstörungen gerechnet werden kann.

In einem Verfahren zum Aussenden von Daten aus einer Sendestation mittels eines Datenübertragungskanals werden die Daten ansprechend auf ein Kennungssignal ausgesendet, das eine Information über eine freie Datenübertragungskapazität des Datenübertragungskanals repräsentiert.

Das Aussenden der Daten kann auf dem Funkweg in einem vorgegebenen Frequenzbereich erfolgen. Bei dem Datenübertragungskanal kann es sich um eines von mehreren Frequenzbändern in dem Frequenzbereich handeln, die zur Übertragung der Daten geeignet sind. Bei der Sendestation kann es sich beispielsweise um einen autarken Funkschalter oder um ein anderes Gerät handeln, das ausgebildet ist, um Daten auf dem Funkweg zu senden und alternativ auch zu empfangen. Bei dem Kennungssignal kann es sich um ein Funksignal handeln, das von der Sendestation über den gleichen Datenübertragungskanal empfangen werden kann, über den die Sendestation ihre Daten aussendet. Das Kennungssignal kann beispielsweise von einer Empfangsstation, die zum Empfang der Daten von der Sendestation bereit ist, an die Sendestation gesendet werden. Mit der freien Datenübertragungskapazität kann ausgedrückt werden, dass der Datenübertragungskanal in einem zur Übertragung der Daten benötigten Zeitfenster nicht durch eine Übertragung anderer Daten belegt ist.

Gemäß einer Ausführungsform kann das Verfahren einen Schritt des Überprüfens eines Bestehens der freien Datenübertragungskapazität des Datenübertragungskanals aufweisen. Entsprechend kann das Aussenden der Daten erfolgen, wenn der Schritt des Überprüfens ergibt, dass die freie Datenübertragungskapazität des Datenübertragungskanals besteht. Der Schritt des Überprüfens kann beispielsweise von einer Empfangsstation ausgeführt werden. Die Empfangsstation kann den Schritt des Überprüfens wiederholt oder über einen vorgegebenen Zeitraum ausführen. Gemäß dieser Ausführungsform kann eine etwaige Kollision der Daten mit anderen Daten, die gleichzeitig über den Datenübertragungskanal ausgesendet werden, wirkungsvoll vermieden werden.

Auch kann das Verfahren einen Schritt des Analysierens des Kennungssignals bezüglich eines Codes aufweisen, der die Sendestation eindeutig als eine Sendestation identifiziert, von der die Daten auszusenden sind. Der Schritt des Analysierens kann von der Sendestation ausgeführt werden. Damit kann auf einfache Weise gewährleistet werden, dass die Sendestation die Daten nur dann aussendet, wenn sie von einer Empfangsstation benötigt werden. Vorteilhafterweise kann der Datenübertragungskanal vor einer Überlastung durch nicht erforderlichen Datenverkehr geschützt werden.

Ferner kann das Verfahren einen Schritt des Auswertens des Kennungssignals aufweisen, wenn in der Sendestation eine sendepflichtige oder auszusendende Nachricht vorliegt. So können die in vielen Fällen knappen Energiereserven der Sendestation vorteilhaft geschont werden, indem die Sendestation das Kennungssignal ignorieren kann, wenn keine zu versendenden Daten vorliegen.

In einem Verfahren zum Aussenden eines Kennungssignals aus einer Empfangsstation mittels eines Datenübertragungskanals repräsentiert das Kennungssignal eine Information über eine freie Datenübertragungskapazität des Datenübertragungskanals.

Bei der Empfangsstation kann es sich beispielsweise um ein Gerät handeln, das ausgebildet ist, um Daten von einer gemäß den vorangehenden Ausführungsformen erläuterten Sendestation zu empfangen, um eine bestimmte Aktion auszuführen. Ungeachtet dessen kann die Empfangsstation auch zum Aussenden von Daten ausgebildet sein. Das Aussenden des Kennungssignals kann auf dem Funkweg in einem vorgegebenen Frequenzbereich erfolgen. Bei dem Kennungssignal kann es sich um ein Funksignal handeln, das von der Empfangsstation über den gleichen Datenübertragungskanal ausgesendet werden kann, über den sie die Daten von einer Sendestation empfangen kann. Das Kennungssignal kann beispielsweise von der Empfangsstation an eine Sendestation gesendet werden, von der die Empfangsstation Daten benötigt. Bei dem Datenübertragungskanal kann es sich um eines von mehreren Frequenzbändern in dem Frequenzbereich handeln, die zur Übertragung der Daten geeignet sind. Mit der freien Datenübertragungskapazität kann ausgedrückt werden, dass der Datenübertragungskanal in einem zur Übertragung der Daten von der Sendestation zu der Empfangsstation benötigten Zeitfenster nicht durch eine Übertragung anderer Daten belegt ist.

Gemäß einer Ausführungsform kann das Verfahren einen Schritt des Prüfens des Datenübertragungskanals auf eine freie Datenübertragungskapazität aufweisen. Dabei kann eine Dauer und/oder eine Frequenz des Prüfens höher als eine Dauer und/oder eine Frequenz eines zu erwartenden Prüfzeitfensters einer Sendestation sein. Beispielsweise kann der Schritt des Prüfens von der Empfangsstation ausgeführt werden. Diese Ausführungsform macht sich vorteilhaft den Umstand zunutze, dass der Empfangsstation im Allgemeinen mehr elektrische Energie zur Verfügung steht als einer Sendestation. So kann die Überprüfung auf Datenübertragungskapazität umfassender und lückenloser erfolgen. Gleichzeitig kann aufseiten der meist mit weniger Energiereserven ausgestatteten Sendestation mit Zugriff auf das Prüfungsergebnis der Empfangsstation Energie gespart werden, da hier eine Prüfung der Datenübertragungskapazität nicht mehr erforderlich ist.

Beispielsweise kann das Kennungssignal ausgebildet sein, um den Datenübertragungskanal während des Aussendens des Kennungssignals für das Aussenden von Daten aus zumindest einer der Empfangsstation zugeordneten Sendestation zu reservieren. Damit kann ohne Weiteres gewährleistet werden, dass die Datenübertragung zwischen der Empfangsstation und der ihr zugeordneten Sendestation nicht durch eine Datenübertragung anderer in dem gleichen Frequenzbereich kommunizierender Teilnehmer gestört wird.

Gemäß einer weiteren Ausführungsform kann das Verfahren einen Schritt der Codierung des Kennungssignals aufweisen, um mittels des codierten Kennungssignals eine erste der Empfangsstation zugeordnete Sendestation und/oder zumindest eine zweite der Empfangsstation zugeordnete Sendestation zum Aussenden von Daten zu identifizieren. Dabei können der ersten Sendestation und/oder der zweiten Sendestation unterschiedliche Funktionen und/oder unterschiedliche Prioritäten zuordenbar sein. So ist es auf einfache Weise möglich, mehrere Empfangsstationen zum Einsatz zu bringen, die gleichzeitig unterschiedliche Daten anfordern können.

Insbesondere können die Daten und/oder das Kennungssignal in einem ISM-Band ausgesendet werden. So können die Daten bzw. das Kennungssignal vorteilhafterweise ohne die Zahlung von Lizenzgebühren versendet werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung eines Verfahrens nach einer der vorstehend beschriebenen Ausführungsformen verwendet wird, wenn das Programm auf einem Computer oder einer Vorrichtung ausgeführt wird.

Eine Sendestation zum Aussenden von Daten aus mittels eines Datenübertragungskanals ist ausgebildet, um die Daten ansprechend auf ein Kennungssignal auszusenden, das eine Information über eine freie Datenübertragungskapazität des Datenübertragungskanals repräsentiert.

Eine Empfangsstation ist zum Aussenden eines Kennungssignals mittels eines Datenübertragungskanals ausgebildet, wobei das Kennungssignal eine Information über eine freie Datenübertragungskapazität des Datenübertragungskanals repräsentiert.

Die Sendestation und die Empfangsstation können ausgebildet sein, um die Schritte der erfindungsgemäßen Verfahren in entsprechenden Einrichtungen durchzuführen bzw. umzusetzen. Auch durch diese Ausführungsvarianten der Erfindung in Form der Sendestation und der Empfangsstation kann die der Erfindung zugrunde liegende Aufgabe schnell und effizient gelöst werden.

Bei der Sendestation und der Empfangsstation kann es sich um Vorrichtungen im Sinne elektrischer Geräte handeln, die Sensorsignale verarbeiten und in Abhängigkeit davon Steuersignale ausgeben. Eine Vorrichtung kann eine oder mehrere geeignete Schnittstelle aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Die Erfindung wird anhand der beigefügten Zeichnungen beispielhaft näher erläutert. Es zeigen:
- Fig. 1: eine Darstellung eines Datenkommunikationssystems über Funk mit einer Sendestation gemäß einem Ausführungsbeispiel der vorliegenden Erfindung und einer Empfangsstation gemäß einem Ausführungsbeispiel der vorliegenden Erfindung;
- Fig. 2: ein Ablaufdiagramm eines Verfahrens zum Aussenden von Daten aus einer Sendestation gemäß einem Ausführungsbeispiel der vorliegenden Erfindung; und
- Fig. 3: ein Ablaufdiagramm eines Verfahrens zum Aussenden eines Kennungssignals aus einer Empfangsstation gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Funkschalter, bei denen zur lokalen Energieerzeugung die Schaltbetätigung selbst herangezogen wird, liefern einen meist nur sehr kurz andauernden, im Millisekundenbereich liegenden, Spannungsimpuls. Weil jede Energiespeicherungsform - i. A. mittels Kapazitäten - im gegebenen Rahmen relativ schnell an Energie verliert, ist es erstrebenswert, die mit dem Funksignal zu übertragenden Daten schnellstmöglich auszusenden.

Im Falle z. B. einer KNX-Anwendung für die Haustechnik werden Zeiten von mehr als 15 ms nur für das einmalige Aussenden eines vollständigen Telegramms benötigt. Zur Sicherung der Übertragung wäre auf dem Stand der Technik ein mehrfaches Aussenden der Datentelegramme zwar wünschenswert (auch wenn diese kürzer oder sogar sehr kurz sind); aber oftmals steht mit den derzeit bekannten Generatoren weder die erforderliche Energie für eine mehrfache Aussendung noch für eine ausreichende zeitlich lange Wartedauer für die Funkschalter zur Verfügung.

Anhand der nachfolgenden Figuren soll die Lösung diese Problematik mittels der hier vorgestellten Erfindung erläutert werden.

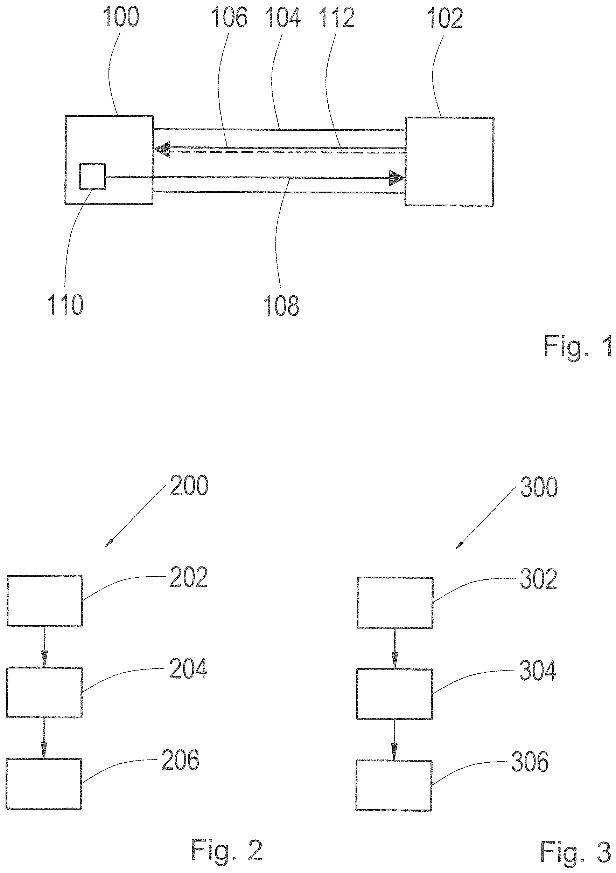

Fig. 1 zeigt eine Prinzipdarstellung zur Erläuterung eines Systems zur Datenkommunikation über Funk. Das System wird gemäß einem in Fig. 1 gezeigten Ausführungsbeispiel von einer Sendestation 100 und einer Empfangsstation 102 gebildet, die über einen Datenübertragungskanal 104 miteinander kommunizieren. Es handelt sich hier bei der Sendestation 100 um einen Funkschalter und bei der Empfangsstation 102 um ein Elektrogerät wie beispielsweise eine Beleuchtungseinrichtung. Es kann sich alternativ bei der Sendestation 100 und der Empfangsstation 102 auch um andere Geräte zur Datenkommunikation über Funk handeln. Die Sendestation 100 ist ausgebildet, um Daten über den Datenübertragungskanal 104 an die Empfangsstation 102 auszusenden, und die Empfangsstation 102 ist ausgebildet, um über den Datenübertragungskanal 104 ein Kennungssignal an die Sendestation 100 auszusenden.

Das in Fig. 1 gezeigte System arbeitet im Frequenzbereich des ISM-Bandes. Gemäß alternativen Ausführungsbeispielen kann das System auch in anderen Frequenzbereichen zum Einsatz kommen. Das eingangs erläuterte LBT-Protokoll wird in erfindungsgemäß modifizierter Form eingesetzt.

In dem in Fig. 1 gezeigten System ist die Empfangsstation 102 ausgebildet, um basierend auf von der Sendestation 100 empfangenen Daten eine Aktion auszuführen. Entsprechend ist die Empfangsstation 102 ausgebildet, um zu überprüfen, ob der Datenübertragungskanal 104 eine freie Kapazität aufweist, damit die Sendestation 100 die erforderlichen Daten ungehindert an die Empfangsstation 102 übermitteln kann. Dazu hört die Empfangsstation 102 in regelmäßigen Abständen für vorbestimmte Zeitintervalle in den Datenübertragungskanal 104 hinein. Wird eine freie Datenübertragungskapazität festgestellt, sendet die Empfangsstation 102 mittels des Datenübertragungskanals 104 ein die freie Datenübertragungskapazität repräsentierendes Kennungssignal 106 an die Sendestation 100.

Ansprechend auf den Empfang und gegebenenfalls eine Auswertung des Kennungssignals 106 sendet die Sendestation 100 Daten 108 an die Empfangsstation 102, damit diese basierend auf den Daten 108 eine erforderliche Aktion ausführen kann, beispielsweise die Aktivierung einer mit der Empfangsstation 102 gekoppelten Beleuchtungseinrichtung. Erfindungsgemäß kann die Sendestation 100 die Daten 108 absetzen, ohne vorher den Datenübertragungskanal 104 auf freie Kapazitäten überprüfen zu müssen, da dies bereits durch die Empfangsstation 102 erledigt wurde.

Bei dem in Fig. 1 gezeigten Ausführungsbeispiel wertet die Sendestation 100 das von der Empfangsstation 102 übermittelte Kennungssignal 106 nur aus, weil in der Sendestation 100 eine sendepflichtige Nachricht 110 vorliegt, die mittels der Daten 108 an die Empfangsstation 102 zu übermitteln ist. Andernfalls ignoriert bei diesem Ausführungsbeispiel die Sendestation 100 das Kennungssignal 106. Beispielsweise weist das Kennungssignal 106 eine geeignete Länge auf, um den Datenübertragungskanal 104 während des Aussendens des Kennungssignals 106 für die Sendung der Daten 108 aus der Sendestation 100 zu "reservieren" und für das Aussenden von Daten aus weiteren Teilnehmern des Systems zu sperren.

Bei dem in Fig. 1 gezeigten Ausführungsbeispiel ist das Kennungssignal 106 mit einem mittels einer Strichlinie gekennzeichneten Code 112 versehen, um die Sendestation 100 eindeutig als die Station zu identifizieren, von der die Empfangsstation 102 eine Datensendung erwartet oder benötigt. Entsprechend ist die Sendestation 100 ausgebildet, um das empfangene Kennungssignal 106 bezüglich des Codes 112 zu analysieren und die Daten 108 erst auszugeben, wenn sich die Sendestation 100 basierend auf der Codeanalyse zur Ausgabe der Daten 108 berechtigt sieht.

Unabhängig vom Empfang des Kennungssignals 106 ist die Sendestation gemäß Ausführungsbeispielen ausgebildet, um selbst in den Datenübertragungskanal 104 hineinzuhören und diesen auf freie Datenübertragungskapazitäten zu überprüfen. So kann die Sendestation 100 die Daten 108 auch unabhängig vom Empfang des Kennungssignals 106 absetzen, sollte dies erforderlich sein.

Der in Fig. 1 die Sendestation 100 bildende Funkschalter und ebenso die Ziel-Empfangsstation 102 sowie unter Umständen weitere Empfangsstationen sind für einen bidirektionalen Datenaustausch ausgelegt, wobei darauf hingewiesen wird, dass i. A. die Empfangsstation 102 wesentlich mehr Energie zur Verfügung hat und - was von noch größerer Bedeutung ist - diese Energie dort permanent zur Verfügung steht.

Wie bereits erwähnt, hört gemäß dem in Fig. 1 gezeigten Ausführungsbeispiel der erfindungsgemäßen funkinitiierten Funkschaltverbindung der Funkschalter 100 - immer nur sehr kurz - in den Kanal 104 hinein, bevor er sendet; er sendet aber nicht nur dann, wenn der Datenübertragungskanal 104 frei ist, sondern bevorzugt auch dann, wenn er die Kennung bzw. das Kennungssignal 106, das erfindungsgemäß von der Ziel-Empfangsstation 102 im Sinne eines "Leuchtturmsignals" abgesetzt wird, aus dem Kanal 104 empfängt.

In diesem erfindungsgemäß modifizierten LBT-Protokoll übernimmt die Empfangsstation 102, die mit einem komfortablen Energievorrat ausgestattet ist, die wesentliche Arbeit des relativ stromintensiven "In-den-Kanal-Hineinhörens". Im Rahmen der natürlich auch für die Empfangsstation 102 dann geltenden Regeln, z. B. der 1 %-Duty-Cycle-Regel im 868-MHz-Band, überprüft diese - z. B. durch ein u. U. relativ häufiges "In-den-Kanal-Hineinhören" - die Kanalbelegung und kann so den freien Kanal 104 erfassen. Wie bereits erwähnt, kann die Empfangsstation 102 diesen sofort durch Aussenden der Kennung 106 in einer geeigneten Länge für die Zeit dieser Kennungssendung auch für "seinen Funkschalter" 100 in gewissem Sinne okkupieren. Übrigens kann das hier vorgestellte Konzept auch in anderen ISM-Bändern, z. B 2,45-GHz, unter Beachtung der dort geltenden Regeln eingesetzt werden.

Wie ein Leuchtturm signalisiert die Empfangsstation 102 mit dem von ihr abgestrahlten Signal 106 den mit der Nachricht 110 wartenden Funkschalter 100 im Sinne einer Aussage von "Hier bin ich, bin empfangsbereit - bitte senden". Der Funkschalter 100 "weiß" so - nämlich durch sein eigenes "In-den-Kanal-Hineinhören" -, dass er jetzt senden kann. Der Anstoß zur Sendung erfolgt also entweder dadurch, dass der Funkschalter 100 den Kanal 104 selbst frei vorfindet, oder durch das Erkennen des "Leuchtturmsignals" 106. Im letzten Fall auch, ohne dass dieser Funkschalter 100 noch einmal in den Kanal 104 hineinhören muss; er kann jetzt seine Nachricht 110 ohne weitere Wartezeiten absetzen. Voraussetzung gemäß dem in Fig. 1 gezeigten Ausführungsbeispiel ist hier, dass im Funkschalter 100 die sendepflichtige Nachricht 110 vorliegt.

Ein konventionelles LBT-Protokoll, das nicht mit der "Leuchtturmfunktion" ausgestattet ist, kann in dieser Anordnung weiterhin genutzt werden und kann ebenso wie bisher auf dem Stand der Technik die Übertragung sicherstellen. Die zusätzliche Möglichkeit, die vom "Leuchtturm" 102 kommende Kennung 106 als Trigger für die eigene Aussendung der Daten 108 zu nutzen, erweitert die Möglichkeit der Anwendung von Funkschaltern aber erheblich.

Ein längeres "In-den-Kanal-Hineinhören" durch den Funkschalter 100 ist gemäß der Erfindung u. U. nicht mehr nötig, und der dazugehörige Empfangsstrom kann klein gehalten werden.

Im gegebenen Funkkanal 104 ist jeder Teilnehmer i. A. gleichberechtigt. Wer einfach sendet, darf das; Störungen sind statistisch einfach einzuplanen. Das "Leuchtturmsignal" 106 kann aber z. B. spezifische Gruppen von Funkschaltern aktivieren. Wenn z. B. zwei Schaltergruppen mit evtl. unterschiedlicher Priorität zwei unterschiedlichen Funktionen zugewiesen werden, dann können zwei oder mehr benachbart liegende Empfänger mit ihrem Kennungssignal jeweils eine der Schaltergruppen kontaktieren. Mehrere "Leuchttürme" 102 können so kooperativ und prioritätsdefinierend arbeiten.

Fig. 2 zeigt ein Ablaufdiagramm eines Ausführungsbeispiels eines Verfahrens 200 zum Aussenden von Daten aus einer Sendestation mittels eines Datenübertragungskanals. In einem Schritt 202 empfängt die Sendestation ein Kennungssignal, das eine Information über eine freie Datenübertragungskapazität des Datenübertragungskanals repräsentiert, von einer Empfangsstation. In einem Schritt 204 analysiert die Sendestation das Kennungssignal bezüglich eines Codes, der die Sendestation eindeutig als eine sendeberechtigte Sendestation identifiziert. Wenn die im Schritt 204 durchgeführte Analyse ergibt, dass die Sendestation zur Datensendung an die Empfangsstation berechtigt ist, sendet die Sendestation in einem Schritt 206 die Daten mittels des Datenübertragungskanals an die Empfangsstation aus.

Fig. 3 zeigt ein Ablaufdiagramm eines Ausführungsbeispiels eines Verfahrens 300 zum Aussenden eines eine freie Datenübertragungskapazität eines Datenübertragungskanals repräsentierenden Kennungssignals aus einer Empfangsstation. In einem Schritt 302 prüft die Empfangsstation den Datenübertragungskanal auf eine freie Datenübertragungskapazität. Ergibt der Schritt 302, dass eine freie Datenübertragungskapazität vorliegt, codiert die Empfangsstation das Kennungssignal in einem Schritt 304 mit einem Code, um sicherzustellen, dass das Kennungssignal nur von einer sendeberechtigten Sendestation empfangen bzw. verwendet werden kann, und sendet in einem Schritt 306 das codierte Kennungssignal über den Datenübertragungskanal aus.

Unter dem in den Figuren 1 bis 3 verwendeten Begriff "Sendestation" 100, kann beispielsweise ein autarker Funkschalter, ein autarker Sensor oder ein Funkschalter verstanden werden. Diese Begriffe sind hier als Synonyme für die Stationen zu sehen, die Daten an eine Empfangsstation übertragen wollen und stellen zugleich den weiteren Umfang der Erfindung dar; das schließt im (bidirektionalen) Funkprotokoll nicht aus, dass diese "Sendestation" 100 auch empfangen kann, um z. B. "in den Kanal hineinzuhören".

Unter dem in den Figuren 1 bis 3 verwendeten Begriff "Empfangsstation" 102 kann beispielsweise ein Empfänger oder ein anderes "Empfangselemente" verstanden werden. Diese Begriffe sind als Synonyme für die Station zu sehen, die Daten von einem Sender empfängt, und stellen ebenfalls den weiteren Umfang der Erfindung dar. Das schließt im (bidirektionalen) Funkprotokoll nicht aus, dass die "Empfangsstation" 102 auch senden kann, um z. B. einen Funkschalter zur Aussendung seiner Daten anzuregen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Sendestation
- 102: Empfangsstation
- 104: Datenübertragungskanal
- 106: Kennungssignal
- 102: Empfangsstation
- 106: Datenübertragungskanal
- 108: Daten
- 110: sendepflichtige Nachricht
- 112: Code
- 200: Verfahren zum Aussenden von Daten
- 202: Schritt des Empfangens eines Kennungssignals
- 204: Schritt des Analysierens des Kennungssignals
- 206: Schritt des Aussendens von Daten
- 300: Verfahren zum Aussenden eines Kennungssignals
- 302: Schritt des Prüfens des Datenübertragungskanals auf eine freie Datenübertragungskapazität
- 304: Schritt der Codierung des Kennungssignals
- 306: Schritt des Aussendens des Kennungssignals

## Patentansprüche

1. Verfahren (200) zum Aussenden von Daten (108) aus einer Sendestation (100) mittels eines Datenübertragungskanals (104) an eine Empfangsstation 102, die die Daten benötigt, um basierend auf den Daten 108 eine erforderliche Aktion auszuführen, wobei die Daten (108) ansprechend auf ein Kennungssignal (106) ausgesendet werden, das eine Information über eine freie Datenübertragungskapazität des Datenübertragungskanals (104) repräsentiert, **dadurch gekennzeichnet, dass** das Verfahren (200) einen Schritt des Analysierens (204) des Kennungssignals (106) bezüglich eines Codes (112) aufweist, der die Sendestation (100) eindeutig als die Sendestation (100) identifiziert, von der die Daten (108) auszusenden sind,
und von der die Empfangsstation 102 eine Datensendung benötigt,
und dass die Sendestation die Daten nur dann aussendet, wenn sie von der Empfangsstation benötigt werden.

2. Verfahren (200) gemäß Anspruch 1, **dadurch gekennzeichnet, dass** das Verfahren (200) einen Schritt des Überprüfens eines Bestehens der freien Datenübertragungskapazität des Datenübertragungskanals (104) aufweist, wobei das Aussenden der Daten (108) erfolgt, wenn der Schritt des Überprüfens ergibt, dass die freie Datenübertragungskapazität des Datenübertragungskanals (104) besteht.

3. Verfahren (200) gemäß Anspruch 1, **dadurch gekennzeichnet, dass** das Verfahren (200) einen Schritt des Auswertens des Kennungssignals (106) aufweist, wenn in der Sendestation (100) eine auszusendende Nachricht vorliegt.

4. Verfahren (200) gemäß zumindest einem der vorhergehende Ansprüche, **dadurch gekennzeichnet, dass** das Verfahren (200) einen Schritt des Aussendens des Kennungssignals (106) aus der Empfangsstation (102), die zum Empfang der Daten von der Sendestation bereit ist, mittels des Datenübertragungskanals (104) aufweist.

5. Verfahren (200) gemäß Anspruch 4, **dadurch gekennzeichnet, dass** das Verfahren (300) einen Schritt des Prüfens (302) des Datenübertragungskanals (104) auf eine freie Datenübertragungskapazität aufweist, wobei eine Dauer und/oder eine Frequenz des Prüfens höher als eine Dauer und/oder eine Frequenz eines zu erwartenden Prüfzeitfensters einer Sendestation (100) ist.

6. Verfahren (200) gemäß Anspruch 4 oder 5, **dadurch gekennzeichnet, dass** das Kennungssignal (106) ausgebildet ist, um den Datenübertragungskanal (104) während des Aussendens des Kennungssignals (106) für ein Aussenden von Daten (108) aus zumindest einer der Empfangsstation (102) zugeordneten Sendestation (100) zu reservieren.

7. Verfahren (200) gemäß einem der Ansprüche 4 bis 6, **dadurch gekennzeichnet, dass** das Verfahren (200) einen Schritt der Codierung (304) des Kennungssignals (106) aufweist, um mittels des codierten Kennungssignals (106) eine erste der Empfangsstation (102) zugeordnete Sendestation (100) und/oder zumindest eine zweite der Empfangsstation (102) zugeordnete Sendestation (100) zum Aussenden von Daten (108) zu identifizieren, wobei der ersten Sendestation (100) und/oder der zweiten Sendestation (100) unterschiedliche Funktionen und/oder unterschiedliche Prioritäten zuordenbar sind.

8. Verfahren (200) gemäß einem der Ansprüche 1 bis 7, **dadurch gekennzeichnet, dass** die Daten (108) und das Kennungssignal (106) in einem ISM-Frequenzband ausgesendet oder empfangen werden.

9. Computer-Programmprodukt mit Programmcode zur Durchführung aller Schritte des Verfahrens (200) nach einem der Ansprüche 1 bis 8, wenn das Programmprodukt auf einer Vorrichtung ausgeführt wird.

## Claims

1. Method (200) for sending data (108) from a transmitting station (100), by means of a data transmission channel (104), to a receiving station (102) which needs the data to carry out a necessary action on the basis of the data (108), wherein the data (108) are sent in response to an identification signal (106) representing an item of information relating to a free data transmission capacity of the data transmission channel (104), **characterized in that** the method (200) has a step of analysing (204) the identification signal (106) with respect to a code (112) which uniquely identifies the transmitting station (100) as the transmitting station (100) from which the data (108) are to be sent,
and from which the receiving station (102) requires a data transmission,
and **in that** the transmitting station transmits the data only when they are required by the receiving station.

2. Method (200) according to Claim 1, **characterized in that** the method (200) has a step of checking an existence of the free data transmission capacity of the data transmission channel (104), wherein the data (108) are sent when the checking step reveals that the free data transmission capacity of the data transmission channel (104) exists.

3. Method (200) according to Claim 1, **characterized in that** the method (200) has a step of evaluating the identification signal (106) if there is a message to be sent in the transmitting station (100).

4. Method (200) according to at least one of the preceding claims, **characterized in that** the method (200) has a step of sending the identification signal (106) from the receiving station (102), which is ready to receive the data from the transmitting station, by means of the data transmission channel (104).

5. Method (200) according to Claim 4, **characterized in that** the method (300) has a step of checking (302) the data transmission channel (104) for a free data transmission capacity, wherein a duration and/or a frequency of the checking operation is/are greater than a duration and/or a frequency of an expected checking time window of a transmitting station (100).

6. Method (200) according to Claim 4 or 5, **characterized in that** the identification signal (106) is designed to reserve the data transmission channel (104) for sending data (108) from at least one transmitting station (100) assigned to the receiving station (102) while the identification signal (106) is being sent.

7. Method (200) according to one of Claims 4 to 6, **characterized in that** the method (200) has a step of coding (304) the identification signal (106) in order use the coded identification signal (106) to identify a first transmitting station (100) assigned to the receiving station (102) and/or at least one second transmitting station (100) for sending data (108) which is assigned to the receiving station (102), wherein different functions and/or different priorities can be assigned to the first transmitting station (100) and/or the second transmitting station (100).

8. Method (200) according to one of Claims 1 to 7, **characterized in that** the data (108) and the identification signal (106) are sent or received in an ISM frequency band.

9. Computer program product having program code for carrying out all steps of the method (200) according to one of Claims 1 to 8 when the program product is executed on an apparatus.

## Revendications

1. Procédé (200) pour envoyer des données (108) depuis une station d'émission (100) au moyen d'un canal de transmission de données (104) à une station de réception 102 qui a besoin des données pour exécuter une action nécessaire en se basant sur les données 108, les données (108) étant envoyées en réaction à un signal d'identification (106) qui représente une information à propos d'une capacité de transmission de données libre du canal de transmission de données (104), **caractérisé en ce que** le procédé (200) comprend une étape d'analyse (204) du signal d'identification (106) concernant un code (112) qui identifie explicitement la station d'émission (100) en tant que station d'émission (100) depuis laquelle sont envoyées les données (108) et de laquelle la station de réception 102 a besoin d'une émission de données,
et **en ce que** la station d'émission n'envoie les données que si la station de réception en a besoin.

2. Procédé (200) selon la revendication 1, **caractérisé en ce que** le procédé (200) comprend une étape de contrôle d'une présence de la capacité de transmission de données libre du canal de transmission de données (104), l'envoi des données (108) ayant lieu lorsqu'il résulte de l'étape de contrôle que la capacité de transmission de données libre du canal de transmission de données (104) est bien présente.

3. Procédé (200) selon la revendication 1, **caractérisé en ce que** le procédé (200) comprend une étape d'interprétation du signal d'identification (106) lorsqu'un message à envoyer est présent dans la station d'émission (100).

4. Procédé (200) selon au moins l'une des revendications précédentes, **caractérisé en ce que** le procédé (200) comprend une étape d'envoi du signal d'identification (106) au moyen du canal de transmission de données (104) depuis la station de réception (102) qui est prête à recevoir les données de la station d'émission.

5. Procédé (200) selon la revendication 4, **caractérisé en ce que** le procédé (300) comprend une étape de contrôle (302) du canal de transmission de données (104) concernant une capacité de transmission de données libre, une durée et/ou une fréquence du contrôle étant supérieure à une durée et/ou une fréquence d'un créneau temporel de contrôle attendu d'une station d'émission (100).

6. Procédé (200) selon la revendication 4 ou 5, **caractérisé en ce que** le signal d'identification (106) est configuré pour réserver le canal de transmission de données (104) pendant l'envoi du signal d'identification (106) pour un envoi de données (108) depuis au moins une station d'émission (100) associée à la station de réception (102).

7. Procédé (200) selon l'une des revendications 4 à 6, **caractérisé en ce que** le procédé (200) comprend une étape de codage (304) du signal d'identification (106) afin d'identifier, au moyen du signal d'identification (106) codé, une première station d'émission (100) associée à la station de réception (102) et/ou au moins une deuxième station d'émission (100) associée à la station de réception (102) en vue de l'envoi de données (108), des fonctions différentes et/ou des priorités différentes pouvant être associées à la première station d'émission (100) et/ou à la deuxième station d'émission (100).

8. Procédé (200) selon l'une des revendications 1 à 7, **caractérisé en ce que** les données (108) et le signal d'identification (106) sont envoyés ou reçus dans une bande de fréquences ISM.

9. Produit de programme informatique comprenant un code de programme destiné à mettre en oeuvre toutes les étapes du procédé (200) selon l'une des revendications 1 à 8 lorsque le produit de programme est exécuté sur un dispositif.
